# EUROPÄISCHE PATENTSCHRIFT

(11) **EP 1 690 884 B1**
(45) Veröffentlichungstag und Bekanntmachung des Hinweises auf die Patenterteilung: **06.04.2011**
(21) Anmeldenummer: 06002720.8
(22) Anmeldetag: 10.02.2006
(51) Int. Cl.: C08G 77/18, C08G 77/50, C08G 77/38, C08G 77/385, C08G 77/445, C09B 67/00, C09C 1/36, C09C 3/12, B01F 17/00, C08K 9/06

(54) **Organosilan-modifizierte Polysiloxane und deren Verwendung zur Oberflächenmodifizierung**
Organosilane-modified polysiloxanes and their use for surface modification
Polysiloxanes modifiés par de l'organosilane et leur utilisation pour la modification de surfaces

(30) Priorität: 14.02.2005 DE 102005006848
(43) Veröffentlichungstag der Anmeldung: 16.08.2006
(73) Patentinhaber: Byk-Chemie GmbH, 46483 Wesel (DE)
(72) Erfinder: Haubennestel, Karlheinz, 46487 Wesel (DE); Bubat, Alfred, 46487 Wesel (DE); Betcke, Daniela, 46485 Wesel (DE); Hartmann, Jürgen, 46147 Oberhausen (DE)
(74) Vertreter: Leifert & Steffan

(56) Entgegenhaltungen:
- EP-A- 0 373 426
- EP-A- 0 890 598
- DE-C1- 4 234 959
- US-A- 4 613 641
- US-A- 4 812 518
- US-A- 5 068 277
- US-A- 5 387 467
- US-A- 5 458 681

## Beschreibung

Die Erfindung betrifft Organosilan-modifizierte Polysiloxane mit über Kohlenstoffatome gebundenen Organosilangruppen, deren Herstellung sowie deren Verwendung zur Modifizierung von Oberflächen, insbesondere der Oberflächenmodifizierung feinteiliger Partikel wie Pigment-, Füllstoff- und Glasfaseroberflächen.

Es ist bekannt, Pigmente, Füllstoffe und Glasfasern mit organischen Polymeren, Polydimethylsiloxan und Organosilanen zu beschichten, um eine bessere Verträglichkeit der normalerweise hydrophilen Pigmente und Füllstoffe in organischen Medien wie Lacken, Dispersionsfarben, Magnetbändern und Kunststoffen zu erhalten.

Durch die Behandlung mit organischen Stoffen werden die Materialien meist hydrophob bzw. organophil und passen sich besser dem System an, in dem sie eingesetzt werden sollen. Dies macht sich bei Pigmenten in einer besseren Verträglichkeit gegenüber dem Medium, leichterer Dispergierbarkeit und höherer Farbausbeute bemerkbar. Die Pigmente und Füllstoffe neigen weniger zum Agglomerieren und haben eine geringere Neigung zur Staubentwicklung.

Die EP 0 373 426 A2 beschreibt die Beschichtung von Pigmenten mit Polyorganosiloxanen, die keine reaktive Gruppen tragen und die in Mengen von 0,1 Gewichtsprozent bis maximal 5 Gewichtsprozent auf die Pigmente aufgebracht werden. Diese Polyorganosiloxane enthalten pro Molekül mindestens eine Si-Alkyl und/oder Si-Arylgruppe mit 9 bis 25 Kohlenstoffatomen, wobei diese Gruppen zu 7 bis 70 Gewichtsprozent im Polysiloxan vorhanden sind und die restlichen Gruppen 1 bis 8 Kohlenstoffatome enthalten.

Die in den Patentschriften DE 4 140 793 C1, DE 4 140 794 C1 und EP 0 725 115 A1 beschriebenen Polysiloxane weisen verträglichkeitsverbessernde Ester- und Epoxygruppen bzw. Alkyl-Arylgruppen im Polyorganosiloxanmolekül auf. Hierdurch soll zum Beispiel die Temperaturstabilität der so beschichteten Füllstoffe verbessert werden. Nachteilig ist bei diesen Verfahren, dass die Organopolysiloxane nicht mit dem Pigment oder Füllstoff abreagieren können und somit kein migrationsstabiler Verbund mit dem Pigment oder Füllstoff stattfindet.

In der US 5 631 310 werden zur Pigmentbehandlung längerkettige Organoalkylsilane verwendet. So findet zum Beispiel eine Kombination von Octyltriethoxysilan mit einem Polydimethylsiloxan Verwendung. Der Vorteil dieser Behandlung mit längerkettigen Alkylsilanen liegt darin, dass durch die Hydrolyse der Alkoxysilane am Pigment eine stabile Anbindung des Alkylsilylrestes stattfindet und eine spätere Migration damit ausgeschlossen werden soll. Nachteilig ist bei diesem Verfahren jedoch, dass bei der Hydrolyse der Organoalkylsilane relativ große Mengen an niedermolekularem Alkohol frei werden. Pro aufgebrachter langkettiger Alkylgruppe werden bis zu drei Moleküle Methanol oder Ethanol frei. Dies wirkt sich bei dem Prozess ungünstig aus, da die Alkohole entfernt werden müssen und die Effizienz der so durchgeführten Beschichtung der Pigmente wirtschaftlich ungünstig ist.

In der EP 0 257 423 werden hydrophobe Farb- und Magnetpigmente beschrieben, die mit Organopolysiloxanen beschichtet sind, die neben verschiedenen Alkyl- und Arylsubstituenten noch reaktive Wasserstoffatome am Polysiloxan tragen. Nachteilig bei diesem Verfahren ist, dass bei der Beschichtung Wasserstoff gebildet wird, was besondere Vorsichtsmaßnahmen aufgrund der Explosionsgefahr bei der Produktion der so beschichteten Pigmente und Füllstoffe im technischen Maßstab notwendig macht.

Überraschenderweise zeigte es sich, dass die oben beschriebenen Nachteile bei einer Oberflächenbeschichtung mit speziellen Organosilan-modifizierten Polysiloxanen vermieden werden können.

Die vorliegende Erfindung stellt daher Organosilan-modifizierte Polysiloxane der folgenden Formel bereit: 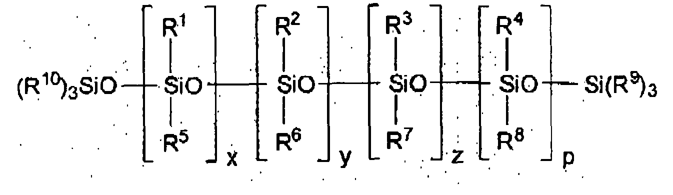 wobei
x = 0 bis 200, y = 5 bis 100, z = bis 50 und p = 1 bis 25;
R¹, R², R³, R⁴ und R⁵ unabhängig voneinander für gesättigte oder ungesättigte, geradkettige oder verzweigte Alkylreste mit 1 bis 4 Kohlenstoffatomen und/oder für Arylreste mit 6 bis 9 Kohlenstoffatomen stehen;
R⁶ für einen geradkettigen oder verzweigten Alkylrest mit 6 bis 22 Kohlenstoffatomen steht;
R⁷ enthalten ist und für einen Rest -(CH₂)ₛ-M-Z steht,
wobei s für 2 bis 20,
M für eine aliphatische Gruppe,
die mindestens eine -O-CO- oder -CO-O- Gruppe und gegebenenfalls Ethergruppen enthält, und
Z für Wasserstoff, -CO-CH₃ oder für einen geradkettigen oder verzweigten
Alkylrest mit 1 bis 4 Kohlenstoffatomen steht;
R⁸ für einen Rest -(CH₂)ₙ-Si(R¹¹)ᵥ(R¹²)₃₋ᵥ steht,
wobei v für 0, 1 oder 2,
n für 2 bis 16,
R¹¹ für einen geradkettigen oder verzweigten Alkylrest mit 1 bis 4 Kohlenstoffatomen, und
R¹² für einen Rest gewählt aus der Gruppe OR¹³, O-CO-R¹³ oder Halogen steht,
worin R¹³ für einen aromatischen Rest oder einen geradkettigen, verzweigten oder cyclischen Alkylrest mit 1 bis 6 Kohlenstoffatomen steht, der gegebenenfalls Ether- und/oder Thioethergruppen enthält; und
R⁹ und R¹⁰ unabhängig voneinander die Bedeutung von R¹, R², R³, R⁴, R⁵, R⁶, R⁷ oder R⁸ besitzen.

Die erfindungsgemäßen Organosilan-modifizierten Polysiloxane vereinen die positiven Eigenschaften der bekannten Polysiloxane und haben den Vorteil, dass aufgrund der nur geringen Mengen an Alkoxysilangruppen, Chlorsilangruppen oder Acetoxysilangruppen pro auf die Pigmente oder Füllstoffe aufgebrachten Alkylpolysiloxaneinheiten nur sehr geringe Mengen an flüchtigen organischen Bestandteilen, wie Chlorwasserstoff, Essigsäure oder Alkoholen, wie Methanol oder Ethanol frei werden. Im Falle der Freisetzung von Alkoholen, liegen die Alkoholmengen pro aufgebrachter Alkylgruppe um bis zu 99 % niedriger, als zum Beispiel beim Aufbringen von Octyltriethoxysilan.

In bevorzugten Ausführungsformen der Erfindung steht x für 0 bis 100, y für 5 bis 50, z = bis 25 und p für 2 bis 4, wobei die Summe aus x, y, z und p vorzugsweise 20 bis 60 beträgt.

Die x-, y-, z- und p-"Einheiten" können in der allgemeinen Formel statistisch verteilt in beliebiger Reihenfolge vorkommen. Als "Einheiten" werden hierbei die Molekülfragmente in den eckigen Klammern der allgemeinen Formel verstanden. Die x-"Einheit" ist daher beispielsweise [(SiO)R¹R⁵], wobei das Molekül x der x-"Einheiten" enthält.

Sind x, y, z und p größer 1, so können innerhalb der einzelnen x-, y-, z- und p-"Einheiten" unterschiedliche R¹, R², R³, R⁴, R⁵, R⁶, R⁷ bzw. R⁸ vorliegen.

Besonders vorteilhaft ist es, wenn in der allgemeinen Formel die Reste R¹, R², R³, R⁴, R⁹ und R¹⁰ unabhängig voneinander für geradkettige Alkylreste mit 1 bis 4 Kohlenstoffatomen stehen. Ganz besonders bevorzugt sind hierunter Methyl- und Ethylgruppen, wobei den Methylgruppen der Vorzug zu geben ist.

Wie oben beschrieben können die Alkylreste R⁶ geradkettig oder verzweigt sein. Beispiele für geradkettige Reste R⁶ sind Hexyl, Heptyl, Octyl, Nonyl, Decyl, Undecyl, Dodecyl, Tridecyl, Tetradecyl Pentadecyl, Hexadecyl, Heptadecyl und Octadecylreste. Verzweigte Alkylreste R⁶ können zum Beispiel 3-Butylhexyl- und 4-Propyloctylreste sein. Bevorzugte geradkettige Alkylreste R⁶ sind beipielsweise der n-Hexyl-, n-Octyl- und n-Decylrest, wobei auch Gemische dieser Reste vorliegen können.

Die Reste R⁶ können beispielsweise durch bekannte Verfahren mittels Anlagerung von ungesättigten Verbindungen wie zum Beispiel 1-Octen, 1-Decen, 1-Dodecen, 1-Hexadecen und 1-Octadecen an SiH-haltige Polysiloxane mittels geeigneter Katalysatoren wie zum Beispiel Hexachloroplatinsäure, Speyers Katalysator, dem Platin-Divinyltetramethyldisiloxan-Komplex oder in Gegenwart von auf Trägermaterialien aufgebrachten Platinverbindungen hergestellt werden.

Die Hydrosilylierungsbedingungen sind allgemein bekannt. Vorzugsweise liegt die Hydrosilylierungstemperatur zwischen Raumtemperatur und 200 °C, vorzugsweise 50 und 150 °C, je nach eingesetztem Katalysator.

Der Rest R⁷ steht vorzugsweise für einen Rest -(CH₂)₃-O-(CO-(CH₂)ₙ-O)ₘ-Z, -(CH₂)₂-O-(CH₂)₄-O-(CO-(CH₂)ₙ-O)ₘ- Z oder -(CH₂),-CO-OR , wobei n = 4 oder 5, m = 1 bis 20, Z = H, -CO-CH₃ oder CH₃, r = 3 bis 20, und R¹⁴ für einen geradkettigen oder verzweigten Alkylrest mit 1 bis 18 Kohlenstoffatomen steht.

Um die Reste R⁷ einzuführen, eignen sich zum Beispiel Additionsverbindungen von Lactonen, wie ε-Caprolacton und/oder δ-Valerolacton, an ethylenisch ungesättigte Alkohole, wie Allylalkohol, Hexenol oder Vinylhydroxybutylether. Diese Verbindungen konnen OH-funktionell, alkyliert oder acyliert sein. Sie sind ebenfalls durch Hydrosilylierungsreaktion mittels der zuvor beschriebenen Katalysatoren in die erfindungsgemäßen Polysiloxane einführbar.

Beim Rest R⁸ handelt es sich vorzugsweise um einen Rest, der sich von einem Alkoxy-, Alkylcarbonyloxy oder Halogen silan ableitet, welches eine Gruppe mit endständiger ethylenischer Doppelbindung aufweist. Eine derartige endständig olefinische Gruppe kann beispielsweise eine 1-Alkylenyl-Gruppe, wie eine 1-Undecenyl-Gruppe, eine Allylgruppe oder eine Vinylgruppe sein. Je nach Größe dieser Gruppe besitzt n einen Wert von 2 bis 16, vorzugsweise 2 bis 12, bevorzugter 2 bis 6 und am bevorzugtesten 2 oder 3.

Der Rest R⁸ enthält mindestens eine Si-gebundene hydrolysierbare Gruppe R¹². Der Rest R¹² ist gewählt aus der Gruppe OR¹³, O-CO-R¹³ oder Halogen, wobei R¹³ für einen aromatischen Rest oder einen geradkettigen, verzweigten oder cyclischen Alkylrest mit 1 bis 6 Kohlenstoffatomen steht, der gegebenenfalls Ether- und/oder Thioethergruppen enthält.

Der Rest R¹³ in OR¹³ oder O-CO-R¹³ steht beispielsweise für Methyl, Ethyl, n-Propyl, iso-Propyl, n-Butyl, iso-Butyl, tert-Butyl, Pentyl, Hexyl oder Cyclohexyl, wobei Methyl, Ethyl, n-Propyl, iso-Propyl bevorzugt sind. Wenn R¹³ ein aromatischer Rest ist, umfasst dies auch herteroaromatische Reste. Ist R¹³ ein aromatischer Rest, wo ist dies bevorzugt eine substituierter oder unsubstituierter Phenyl- oder Naphthylrest.

Wenn R¹² für Halogen steht, so ist vorzugsweise Chlor, Brom und lod umfasst. Besonders bevorzugt sind Chlor und Brom.

Bei den Resten R⁸ handelt es sich beispielsweise um Reste, die sich von einem Vinylalkoxysilan, wie beispielsweise Vinyltrimethoxysilan, Vinyltriethoxysilan oder Vinyldiethoxymethylsilan, einem Vinylacetoxysilan oder Vinylchlorsilan ableiten. Besonders bevorzugt leiten sich die Reste R⁸ von einem Vinyltrialkoxysilan oder Vinyltriacetoxysilan ab. R⁸ kann daher beispielsweise unter anderem für -(CH₂)₂₋Si(OCH₃)₃, -(CH₂)₂―Si(OC₂H₅)₃ oder -(CH₂)₂-Si(O―CO―CH₃)₃ stehen. Besonders bevorzugt sind hierbei die Ethoxy- und Methoxysilane, da bei der späteren Anbindungsreaktion an Pigmente leicht abtrennbare, im Vergleich zur Essigsäure eher geruchsneutrale Alkohole entstehen.

Weitere mögliche Silane, die zur Einführung des Rests R⁸ geeignet sind, sind zu zum Beispiel: Allyl(chlorpropyl)dichlorsilan, Allyldimethylchlorsilan, Allylmethyldichlorsilan, Allyltrichlorsilan, Allyltriethoxysilan, Allyltrimethoxysilan, 10-Undecenyltrichlorsilan, Vinyldimethylchlorsilan, Vinyldimethylethoxysilan, Vinylmethyldiacetoxysilan, Vinylmethyldichlorsilan, Vinylmethyldiethoxysilan, Vinylmethyldimethoxysilan, Vinyltriacetoxysilan, Vinyltributoxysilan, Vinyltrichlorsilan, Vinyltriethoxysilan, Vinyltrimethoxysilan, Vinyltriisopropoxysilan, Vinyltriphenoxysilan, Vinyltris(2-methoxyethoxy)silan.

Die Silangruppen R⁸ sind ebenfalls durch Hydrosilylierungsreaktion in die SiH-haltigen Polysiloxane, die vorzugsweise bereits die Reste R¹, R², R³ R⁴, R⁵, R⁹ und/oder R¹⁰ enthalten, einführbar. Hierfür eignen sich bevorzugt die oben genannten Vinylalkoxysilane oder Vinylacetoxysilane.

Die oben beschriebenen Hydrosilylierungsreaktionen können mit Gemischen der ethylenisch ungesättigten Verbindungen in einem Schritt durchgeführt werden. Hierbei können die Gruppen R⁶, R⁷ und R⁸ quasi simultan in Gegenwart der genannten Katalysatoren mit dem SiH-Gruppen enthaltenden Polysiloxan zur Reaktion gebracht werden.

Es kann jedoch vorteilhaft sein zunächst nur einen Teil der SiH-Gruppen des SiH-haltigen Polysiloxans zu den Resten R⁶, R⁷ und/oder R⁸ umzusetzen und in einem weiteren Schritt die Umsetzung der verbleibenden SiH-Gruppen zu Resten R⁶ zu vollziehen.

Insbesondere wenn der oder die Reste R⁸ in molarem Unterschuss, beispielsweise gegenüber dem Rest R⁶, eingeführt werden sollen empfiehlt sich letztere Vorgehensweise, nämlich die Reaktion mit den ungesättigten Silanen zur Einführung des Rests R⁸ in einem ersten Hydrosilylierungsschritt durchzuführen.

Vorzugsweise im letzten Schritt werden verbleibende SiH-Gruppen mit dem 1-Olefin zu Resten R⁶ umgesetzt, da in diesem Fall Überschüsse von nicht addiertem 1-Olefin durch Destillation leicht wieder entfernt werden können und damit sichergestellt ist, dass beispielsweise anteilig geringere Mengen an Alkoxysilangruppen oder den anderen hydrolysierbaren Gruppen statistisch verteilt im erfindungsgemäßen Polysiloxan vorliegen.

Die so hergestellten erfindungsgemäßen Polysiloxane werden auf die zu behandelnden Pigmente und Füllstoffe oder makroskopisch planar Oberflächen nach bekannten Verfahren aufgebracht. Als makroskopisch planar kann jede Oberfläche angesehen werden, die nicht als Teilchenoberfläche von Kleinstteilchen, wie Pigmenten und Füllstoffen zu verstehen ist. Der Begriff umfasst somit beispielsweise auch geschwungene oder gebogene Körper sowie deren eventuell vorhandene Kanten und Spitzenbereiche und dergleichen.

Die Erfindung betrifft somit auch die Verwendung der erfindungsgemäßen oder erfindungsgemäß erhaltenen Organosilan-modifizierten Polysiloxane zu Oberflächenmodifizierung.

Hierfür bieten sich zum Beispiel Verfahren an, welche direkt im Anschluss an die Produktion der Pigmente und Füllstoffe stattfinden können, das heißt, wenn die Pigmente noch im feuchten Zustand, zum Beispiel als Presskuchen oder als Slurry vorliegen.

Die Alkoxypolysiloxane, oder andere hydrolysierbare Polysiloxane der vorliegenden Erfindung, können bei diesen Verfahren entweder direkt oder in einer ganz oder teilweise vorhydrolysierten Form in die noch feuchten Pigmente oder Füllstoffe eingerührt werden, wobei es vorteilhaft ist, wenn beispielsweise die erfindungsgemäßen Polysiloxane unter Zuhilfenahme bekannter Emulgatoren in Wasser voremulgiert werden.

Die so behandelten Pigmente und Füllstoffe werden dann wie üblich getrocknet und wenn nötig fein gemahlen.

Die erfindungsgemäßen Polysiloxane können aber auch zum Beispiel während des Mahlvorganges von trockenen Pigmenten und Füllstoffen, zum Beispiel durch Einsprühen oder mittels anderer bekannter Beschichtungsverfahren, eingebracht werden.

Durch die stattfindende Hydrolyse beispielsweise der Alkoxygruppen oder der anderen hydrolysierbaren Gruppen des erfindungsgemäßen Poylsiloxans und Kondensation der gebildeten SiOH-Gruppen am Pigment, Füllstoff oder einer anderen Oberfläche findet eine migrationsstabile Beschichtung dieser Pigmente und Füllstoffe statt.

Um die Adsorption an den Pigmenten und Füllstoffen zu erleichtern, ist es auch möglich, die erfindungsgemäßen Polysiloxane vor der Applikation ganz oder teilweise vorzuhydrolysieren und diese dann aus einer wässrigen Emulsion auf die zu beschichtenden Pigmente und Füllstoffe aufzubringen. Werden in einem solchen Fall Alkoxypolysiloxane vorhydrolysiert, entstehen die korrespondierenden Alkohole, die bei Bedarf vor der Oberflächenmodifizierung entfernbar sind.

Als Pigmente und Füllstoffe, die mit den erfindungsgemäßen Polysiloxanen beschichtet sind, eignen sich eine Vielzahl anorganischer und organischer Pigmente und Füllstoffe.

Als anorganische Pigmente und Füllstoffe lassen sich zum Beispiel Titandioxidpigmente, welche nach dem Sulfat- oder Chloridprozess hergestellt wurden und in der Rutil- oder Anatasform vorliegen können und gegebenenfalls gitterstabilisiert sind nennen. Weitere Beispiele sind Zinkoxid, Lithopone, Eisenoxidpigmente, Ultramarinpigmente, Chromatpigmente, Chromoxidpigmente, oxidische Mischphasenpigmente wie Spinell- und Rutil-Mischphasenpigmente, wobei es sich neben Farb- auch um Magnetpigmente handeln kann.

Als geeignete Füllstoffe lassen sich beispielsweise gefällte und natürliche Calciumcarbonate, Kieselsäuren unterschiedlicher Herstellverfahren, Al(OH)₃, Mg(OH)₂, Talkum, Glimmer, Wollastonite, Glasfasern und Hohlglaskugeln nennen. Bei den organischen Pigmenten können zum Beispiel Azo-Pigmente, Metall-Komplexpigmente, Anthrachinon-Pigmente, polyzyklische Pigmente aus der Gruppe der Perylen-, Perinon-, Chinacridon-, Isoindolin-, Dioxazin-, Thioindigo-, Pyrrolo-Pyrrol- und Phthalocyaninpigmente mit den erfindungsgemäßen Polysiloxanen beschichtet werden.

Auf die Pigmente und Füllstoffe werden je nach gewünschtem Hydrophobierungsgrad vorzugsweise 0,1 bis 5 Gew-% der erfindungsgemäßen Polysiloxane bezogen auf das Pigment- oder Füllstoffgewicht aufgebracht. Die aufzubringende Menge richtet sich auch nach der freien Oberfläche der zu behandelnden Pigmente und Füllstoffe, so kann zum Beispiel bei einem relativ grobteiligen Füllstoff 0,1 Gew-% ausreichend sein, während es bei einem feinteiligen organischen Pigment auch 2 - 5 Gew-% sein können. Bevorzugt werden zwischen 0,5 bis 2 Gew-% auf die Pigmente und Füllstoffe aufgebracht.

Die so behandelten Pigmente und Füllstoffe weisen aufgrund ihrer Hydrophobie eine besonders gute Verträglichkeit in einer Vielzahl von Kunststoffen, wie zum Beispiel Polyolefinen wie Polyethylen und Polypropylen, aber auch in Polyvinylchlorid (PVC), Polyamiden, Polyethylenterephthalaten und dergleichen auf.

Die Verträglichkeit in polareren Kunststoffen wie zum Beispiel Polyamiden lässt sich durch die Gruppe R⁷ sehr leicht anpassen. Durch die erfindungsgemäßen Polysiloxane können Pigmente, die mit derartigen Polysiloxanen beschichtet sind vorteilhaft in polaren thermoplastischen Materialien wie beispielsweise Polyethylenterephthalat (PET) oder thermoplastischen Polyurethanen eingesetzt werden. Wenn Pigmente mit Emulsionen aus den erfindungsgemäßen Polysiloxanen beschichtet werden, so ist ein zusätzlicher Gehalt an Ethergruppen vorteilhaft, da solche Polysiloxane zur Stabilisierung der Emulsionen oder Selbstemulgation neigen.Die Anzahl der Gruppen, welche einen Rest R⁷ innerhalb des Polysiloxans enthalten ist, nur durch den oberen Wert von 50 begrenzt. Vorzugsweise ist die Anzahl der R⁷ enthaltenden Gruppen z = 1 bis 50 oder noch bevorzugter 3 bis 10. Für den Einsatz in Polyethylen ist es vorteilhaft die Gruppe R⁷ nur in ganz geringen Anteilen einzusetzen.

Die erfindungsgemäß behandelten Pigmente sind staubarm, frei fließend, lassen sich sehr leicht dispergieren und weisen demzufolge auch ausgezeichnete optische Eigenschaften auf.

Aufgrund der kovalenten Anbindung der erfindungsgemäßen Polysiloxane an die Pigmente und Füllstoffe ist das Verhalten gegen Auswaschen oder Migration ebenfalls ausgezeichnet.

Neben der Beschichtung von Pigmenten und Füllstoffen ist auch eine Beschichtung makroskopisch planarer Oberflächen mit den erfindungsgemäßen Organosilan-modifizierten Polysiloxanen möglich, um Oberflächen mit hydrophoben oder organophilen Eigenschaften auszustatten.

Da die beschichtbaren Pigmente und Füllstoffe organischer oder anorganischer Natur sein können, gilt dies auch für makroskopisch planare Substratoberflächen. Diese umfassen beispielsweise neben Kunststoffen, Metallen, Oxiden, Hydroxiden und keramischen Materialien auch Beton, Kalksandstein, Gipskarton, Naturstein, Naturklinker und dergleichen. So sind die erfindungsgemäßen organo-modifizierten Polysiloxane beispielsweise auch im Bauten- und Fassadenschutz einsetzbar.

### Anwendungstechnische Beispiele

### 1. Viskositätsmessung

Bei der Einarbeitung von Pigmenten und Füllstoffen in Lacke, Farben und Kunststoffe werden vom Verarbeiter günstige Rheologieeigenschaften erwartet.

Insbesondere wird bei hohen Pigment- und Füllstoffgehalten niedrige Viskosität gewünscht.

Zur Überprüfung der Wirksamkeit der erfindungsgemäß zu verwendenden Modifizierungsmittel werden die Pigmente und Füllstoffe 1 Std. in einer Schüttelmühle (SCANDEX Typ BAS 20) mit 15-mm-Kugeln und 0,2 bis 1 Gew.-% Zusatz der zu prüfenden Organopolysiloxane behandelt und anschließend in Di-2-ethylhexylphthalat (DOP) bzw. Paraffinöl (30 cp) unter Verwendung einer Mizer-Scheibe (Durchmesser = 4 cm) zunächst 1 Min. mit 2000 UpM (v = 4,25 m/s) und anschließend 3 Min. mit 4000 UpM (v = 8,5 m/s) dispergiert.

Die Viskositäten der resultierenden Dispersionen werden gemäß DIN-Norm 53 019 mit einem CONTRAVES-RHEOMAT bei einer Meßtemperatur von T= 25°C mit dem Meßsystem MS-DIN 125 bei einer Drehzahl von 5,15 UpM und einer Grenzfrequenz von 1 Hz ermittelt.

Zum Nachweis der kovalenten Belegung werden ein ausgewähltes Pigment und ein Füllstoff mit den erfindungsgemäßen Polysiloxanen behandelt. Im Vergleich hierzu wird ein nicht alkoxymodifiziertes Polysiloxan ebenfalls auf dieses Pigment und den Füllstoff aufgebracht und das Dispergierverhalten in Paraffinöl und DOP betrachtet.

Dieses so behandelte Pigment und der Füllstoff werden ebenfalls einer Extraktion mit einem Lösungsmittel unterworfen und nach Trocknung wird das Dispergierverhalten dieser extrahierten Pigmente und Füllstoffe erneut betrachtet:

Hierzu wurden 20 g des beschichteten Pigments mit 150 g n-Heptan bei 40 °C intensiv über einen Zeitraum von 30 Minuten vermischt. Anschließend wurde zentrifugiert und die überstehende Lösung verworfen. Die extrahierten Pigmente wurden bei Raumtemperatur für mindestens 24 h getrocknet. Die Ergebnisse zeigen, dass eine feste Bindung des organosilan-modifizierten Polysiloxans an die Pigment bzw. Füllstoffoberfläche erfolgt, da die Ergebnisse im wesentlichen denen der nicht extrahierten Pigmente und Füllstoffe entsprechen.

Die Ergebnisse sind in Tabellen 1 und 2 dargestellt.

### 2. Dispergierbarkeit in Kunststoffen

Die Dispergierbarkeit in Kunststoffen wurde in Polyvinylchlorid (PVC) nach dem Einstreutest und in Polyethylen (PE) nach einem so genannten Blasfolientest geprüft.

Beim Einstreutest werden zur Prüfung von Weißpigmenten 50 g PVC-Compound (Grundmischung A nach DIN 53 775) und 0,05 g Flammruß in einem PE-Becher mit einem Spatel innig vermischt und auf einem Mischwalzwerk bei 165°C, Friktion 1:1,2, in 2 Minuten zu einem schwarzen Fell ausgewalzt. Eine abgewogene Menge von 5 g Pigment wird innerhalb 0,5 min aufgestreut. Auf den Walzen hängen gebliebenes Pigment wird mit einem Kupferspachtel abgekratzt und ebenfalls in das Fell eingearbeitet. Anschließend wird die Zeit genommen und unter ständigem manuellen Wenden vom PVC-Fell nach 1,2,4,8 und 16 min. Walzdauer je ca. 10 x 10 cm große Proben entnommen.

Bei der Prüfung von Buntpigmenten wird analog verfahren; nur werden die weiße Grundmischung B nach DIN 53 775 und 0,5 g Buntpigment eingesetzt.

Die Beurteilung erfolgt anhand der Stippenbildung wie folgt:

| | | |
|---|---|---|
| Stufe 1 | sehr gut | keine Stippen |
| Stufe 2 | gut | Stippen bis 2 min |
| Stufe 3 | mäßig | Stippen bis 4 min |
| Stufe 4 | schlecht | Stippen bis 8 min |
| Stufe 5 | sehr schlecht | Stippen bis 16 min |

Beim Blasfolientest wird zunächst aus 150 g Hochdruck-PE (Schmelzindex ca. 20) und 350 g Pigment ein sogenanntes Masterbatch hergestellt. Hierfür werden Pigment und Kunststoffpulver in einem Plastikbeutel durch Schütteln gemischt, durch ein 2-mm-Sieb gegeben und in einem Zweiwellenkneter bei 195°C und 60 U/min verbatcht.

Anschließend werden 500 g Hochdruck-PE (Schmelzindex ca. 0,5) mit 7,1 g Masterbatch vermischt, einmal bei 220°C extrudiert und zu Folien verblasen. 0,4 m² der Folie werden auf Pigmentstippen untersucht.

### Dispergierbarkeit in PE:

Die Prüfung der Dispergierbarkeit in PE erfolgt analog dem oben beschriebenen Blasfolientest. 0,4 m² der erhaltenen Folien werden auf Pigmentstippen untersucht.

Die Beurteilung erfolgt anhand der Zahl der Stippen:
- sehr gut: bei weniger als 10 Stippen
- gut: bei bis zu 20 Stippen
- mäßig: bei bis zu 50 Stippen
- schlecht: bei mehr als 50 Stippen

Als Beschichtungsmittel werden die folgenden, modifizierten Organopolysiloxane eingesetzt:

Die Ergebnisse des Einstreutests und des Blasfolientests sind in Tabellen 3 und 4 beschreiben.

### Beispiel 1 (illustrativ)

In einem Vierhalskolben mit Rührer, Rückflußkühler, Thermometer, Tropftrichter und Inertgaszuleitung wird 200 g Polydimethyl-methyl-H-siloxan mit einem Si-H-Äquivalent von 285 g/mol eingewogen. Der Vierhalskolben wird auf 100 mbar evakuiert und anschließend mit Stickstoff wieder befüllt. Danach wird 0,0108 g Platin-Divinyltetramethyldisiloxan-Komplex (Pt-Gehalt 25 Gew.-%) zugegeben. Anschließend wird das Gemisch auf 60°C aufgeheizt. Nach erreichen von 60°C wird 54,2 g 1-Octen (0,48 mol) und 6,6 g Vinyltriethoxysilan (0,03 mol) so schnell zugetropft, dass sich eine maximale Reaktionstemperatur von 110°C einstellt. Zutropfzeit ca. 30 Minuten. Nach Beendigung der Zutropfphase beträgt die Nachreaktion 10 Minuten. Anschließend wird 38,7 g 1-Octen (0,35 mol) zugetropft, so dass sich eine Reaktionstemperatur von 117°C bis 120°C einstellt. Nach Ende der Zutropfphase wird 1 Stunde bei 120°C gerührt. Anschließend wird durch Anlegen von Vakuum, bei einer Destillationstemperatur von 130°C der verbliebene Überschuss 1-Octen abdestilliert.

### Beispiel 2 (illustrativ)

In gleicher Weise, wie im Beispiel 1 beschrieben, wurde 104 g Polymethyl-H-siloxan mit einem Si-H-Äquivalent von 65 g/mol mit 51,6 g Vinyltrichlorsilan (0,32 mol) und 125,2 g 1-Octen (1,12 mol) in der 1. Stufe umgesetzt. Als Katalysator wurde 0,012 g Platin-Divinyltetramethyldisiloxan-Komplex (Pt-Gehalt 25 Gew.-%) zugegeben. In der 2. Stufe wurde mit 53,7g 1-Octen (0,48 mol) die Reaktion zu Ende geführt.

### Beispiel 3 (illustrativ)

In gleicher Weise, wie im Beispiel 1 beschrieben, wurde 104 g Polymethyl-H-siloxan mit einem Si-H-Äquivalent von 65 g/mol mit 74,2 g Vinyltriethoxysilan (0,32 mol) und 125,2 g 1-Octen (1,12 mol) in der 1. Stufe umgesetzt. Als Katalysator wurde 0,013 g Platin-Divinyltetramethyldisiloxan-Komplex (Pt-Gehalt 25 Gew.-%) zugegeben. In der 2. Stufe wurde mit 53,7g 1-Octen (0,48 mol) die Reaktion zu Ende geführt.

### Beispiel 4 (illustrativ)

In gleicher Weise, wie im Beispiel 1 beschrieben, wurde 104 g Polylmethyl-H-siloxan mit einem Si-H-Äquivalent von 65 g/mol mit 47,3 g Vinyltrimethoxysilan (0,32 mol) und 125,2 g 1-Octen (1,12 mol) in der 1. Stufe umgesetzt. Als Katalysator wurde 0,012 g Platin-Divinyltetramethyldisiloxan-Komplex (Pt-Gehalt 25 Gew.-%) zugegeben. In der 2. Stufe wurde mit 53,7 g 1-Octen (0,48 mol) die Reaktion zu Ende geführt.

### Beispiel 5 (illustrativ)

In einem Vierhalskolben mit Rührer, Rückflußkühler, Thermometer, Tropftrichter und Inertgaszuleitung wird 480 g Polydimethyl-methyl-H-siloxan mit einem Si-H-Äquivalent von 285 g/mol und 31,52 g Vinyltriethoxysilan (0,16 mol) eingewogen. Der Vierhalskolben wird auf 100 mbar evakuiert und anschließend mit Stickstoff wieder befüllt. Danach wird das Reaktionsgemischauf 80°C aufgeheizt und nach erreichen von 80°C 0,182 g Speyers Katalysator (Pt-Gehalt 6 Gew.-%) zugegeben. Nach Abklingen der exothermen Reaktion wird 396,48 g 1-Hexadecen (1,77 mol) zugetropft, so dass sich eine Reaktionstemperatur von 117°C bis 120°C einstellt. Nach Ende der Zutropfphase wird 1 Stunde bei 120°C gerührt.

### Beispiel 6 (erfindungsgemäß)

In einem Vierhalskolben mit Rührer, Rückflusskühler, Thermometer, Tropftrichter und Inertgasleitung werden 65 g Polymethyl-H-siloxan mit einem Si-H-Äquivalent von 65 g/mol, 14,8 g (0,1 mol) Vinyltriethoxysilan und 55,6 g (0,1 mol) CH₂=CH-CH₂-(O-CO-[CH_{2]5})₄0-OCCH₃ eingewogen. Der Vierhalskolben wird auf 100 mbar evakuiert und anschließend mit Stickstoff wieder befüllt. Danach wird das Reaktionsgemisch auf 80 °C aufgeheizt und nach erreichen von 80 °C 0,1 g Speyer's Katalysator (Pt-Gehalt 6 Gew.-%) zugegeben. Nach Abklingen der exothermen Reaktion werden 224 g (1,0 mol) 1-Hexadecen zugetropft, so dass sich eine Reaktionstemperatur von 110 °C bis 120 °C einstellt. Nach Ende der Zutropfphase wird 1 Stunde bei 120 °C gerührt.

### Beispiel 7 (erfindungsgemäß)

In einem Vierhalskolben mit Rührer, Rückflusskühler, Thermometer, Tropftrichter und Inertgasleitung werden 65 g Polymethyl-H-siloxan mit einem Si-H-Äquivalent von 65 g/mol, 22,2 g (0,15 mol) Vinyltriethoxysilan und 234,6 g (0,3 mol) CH₂=CH-CH₂-(O-CH₂-CH₂)₈-(O-CO-[CH₂]₅)₃O-OCCH₃ eingewogen. Der Vierhalskolben wird auf 100 mbar evakuiert und anschließend mit Stickstoff wieder befüllt. Danach wird das Reaktionsgemisch auf 80 °C aufgeheizt und nach erreichen von 80 °C 0,11 g Speyer's Katalysator (Pt-Gehalt 6 Gew.-%) zugegeben. Nach Abklingen der exothermen Reaktion werden 176,4 g (0,9 mol) 1-Tetradecen zugetropft, so dass sich eine Reaktionstemperatur von 110 °C bis 120 °C einstellt. Nach Ende der Zutropfphase wird 1 Stunde bei 120 °C gerührt.

### Vergleichsbeispiel

Als Vergleichs-Siloxan dient das aus der DE 4140794 C1 bekannte:

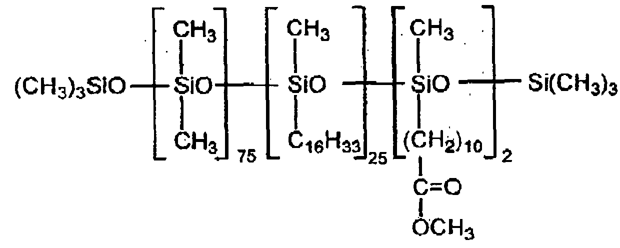

**Tabelle 1**

| | | | | | | |
|---|---|---|---|---|---|---|
| **Viskosität in Paraffinöl [mPas]** | | | | | | |
| Dispergierung von TiO₂, Al(OH)₃ und Mg(OH)₂ (mit 1 % Additiv belegt) in Paraffinöl zum Stand der Technik (einschließlich der Extraktionsversuche). | | | | | | |

| **Produkt** | **30% Mg(OH)₂** | **30% Mg(OH)₂** | **54% Al(OH)₃** | **54% Al(OH)₃** | **54% TiO₂** | **54% TiO₂** |
|---|---|---|---|---|---|---|
| | | **extrahiert** | | **extrahiert** | | **extrahiert** |
| Unbehandelt | nicht meßbar | nicht meßbar | nicht meßbar | nicht meßbar | 4062 | 4200 |
| Vergleichsbeispiel | 750 | 2800 | 580 | 2150 | 250 | 2050 |
| Beispiel 1 | 645 | 1100 | 540 | 890 | 210 | 380 |
| Beispiel 2 | 590 | 750 | 520 | 820 | 195 | 270 |
| Beispiel 3 | 615 | 930 | 610 | 935 | 280 | 410 |
| Beispiel 4 | 720 | 975 | 575 | 825 | 230 | 390 |
| Beispiel 5 | 680 | 820 | 625 | 910 | 290 | 445 |

**Tabelle 2**

| | | | | | | |
|---|---|---|---|---|---|---|
| **Viskosität in DOP [mPas]** | | | | | | |
| Dispergierung von TiO₂, Al(OH)₃ und Mg(OH)₂ (mit 1 % Additiv belegt) in DOP zum Stand der Technik (einschließlich der Extraktionsversuche). | | | | | | |

| **Produkt** | **30% Mg(OH)2** | **30%Mg(OH)2** | **54% Al(OH)3** | **54% Al(OH)3** | **54% TiO2** | **54% TiO2** |
|---|---|---|---|---|---|---|
| | | **extrahiert** | | **extrahiert** | | **extrahiert** |
| Unbehandelt | nicht meßbar | nicht meßbar | nicht meßbar | nicht meßbar | 1830 | 1910 |
| Vergleichsbeispiel | 620 | 1900 | 660 | 2350 | 344 | 1650 |
| Beispiel 1 | 460 | 860 | 650 | 980 | 380 | 490 |
| Beispiel 2 | 445 | 675 | 460 | 665 | 325 | 425 |
| Beispiel 3 | 530 | 920 | 575 | 890 | 425 | 730 |
| Beispiel 4 | 590 | 880 | 565 | 925 | 390 | 560 |
| Beispiel 5 | 610 | 910 | 690 | 970 | 465 | 785 |

**Tabelle3**

| | | |
|---|---|---|
| **Dispergierbarkeit in PVC** | | |
| Dispergierbarkeit von TiO₂ (mit 1 % Additiv belegt) in Polyvinylchlorid (Einstreutest) | | |

| **Produkt** | **nicht extrahiert** | **extrahiert** |
|---|---|---|
| Unbehandelt | sehr schlecht | sehr schlecht |
| Vergleichsbeispiel | sehr gut | schlecht |
| Beispiel 1 | sehr gut | gut |
| Beispiel 2 | sehr gut | sehr gut |
| Beispiel 3 | sehr gut | gut |
| Beispiel 4 | sehr gut | gut |
| Beispiel 5 | sehr gut | gut |

**Tabelle 4**

| | | |
|---|---|---|
| **Dispergierbarkeit in PE** | | |
| Dispergierbarkeit von TiO₂ (mit 1 % Additiv belegt) in PE (Blasfolientest). | | |

| **Produkt** | **nicht extrahiert** | **extrahiert** |
|---|---|---|
| Unbehandelt | sehr schlecht | sehr schlecht |
| Vergleichsbeispiel | sehr gut | mäßig |
| Beispiel 1 | sehr gut | gut |
| Beispiel 2 | sehr gut | sehr gut |
| Beispiel 3 | sehr gut | gut |
| Beispiel 4 | sehr gut | gut |
| Beispiel 5 | sehr gut | gut |

## Patentansprüche

1. Organosilan-modifizierte Polysiloxane der folgenden Formel: 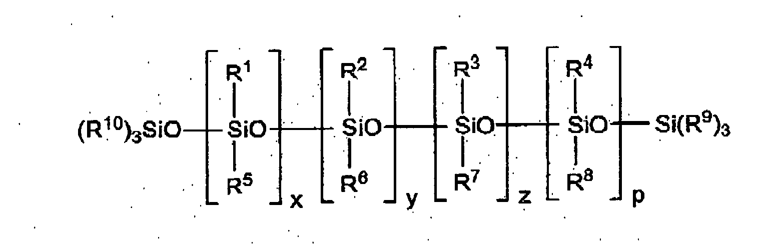 wobei
x = 0 bis 200, y = 5 bis 100, z = bis 50 und p = 1 bis 25 beträgt;
R¹, R², R³, R⁴ und R⁵ unabhängig voneinander für gesättigte oder ungesättigte, geradkettige oder verzweigte Alkylreste mit 1 bis 4 Kohlenstoffatomen und/oder für Arylreste mit 6 bis 9 Kohlenstoffatomen stehen;
R⁶ für einen geradkettigen oder verzweigten Alkylrest mit 6 bis 22 Kohlenstoffatomen steht;
R⁷ enthalten ist und für einen Rest -(CH₂)ₛ-M-Z steht,
wobei s für 2 bis 20,
M für eine aliphatische Gruppe,
die mindestens one -O-CO- oder -CO-O- Gruppe und gegebenenfalls Ethergruppen enthält, und
Z für Wasserstoff, -CO-CH₃ oder für einen geradkettigen oder verzweigten Alkylrest mit 1 bis 4 Kohlenstoffatomen steht;
R⁸ für einen Rest -(CH₂)ₙ-Si(R¹¹)ᵥ(R¹²)₃₋ᵥ steht,
wobei v für 0, 1 oder 2,
n für 2 bis 16,
R¹¹ für einen geradkettigen oder verzweigten Alkylrest mit 1 bis 4 Kohlenstoffatomen, und
R¹² für einen Rest gewählt aus der Gruppe OR¹³, O-CO-R¹³ oder Halogen steht,
worin R¹³ für einen aromatischen Rest oder einen geradkettigen, verzweigten oder cyclischen Alkylrest mit 1 bis 6 Kohlenstoffatomen steht, der gegebenenfalls Ether- und/oder Thioethergruppen enthält; und
R⁹ und R¹⁰ unabhängig voneinander die Bedeutung von R¹, R², R³, R⁴, R⁵, R⁶, R⁷ oder R⁸ besitzen.

2. Organosilan-modifizierte Polysiloxane gemäß Anspruch 1, wobei x = 0 bis 100 und/oder y = 5 bis 50 und/oder z = bis 25 und/oder p = 2 bis 4 und/oder die Summe aus x, y, z und p 20 bis 60 beträgt.

3. Organosilan-modifizierte Polysiloxane gemäß einem der Ansprüche 1 oder 2, wobei R¹, R², R³, R⁴, R⁹ und R¹⁰ unabhängig voneinander für geradkettlge Alkylreste mit 1 bis 4 Kohlenstoffatomen stehen.

4. Organosilan-modifizierte Polysiloxane gemäß Anspruch 3, wobei R¹, R², R³, R⁴, R⁹ und R¹⁰ für Methyl oder Ethyl stehen.

5. Organosllan-modifizierte Polyslloxane gemäß einem oder mehreren der Ansprüche 1 bis 4, wobei R⁶ für n-Hexyl, n-Octyl oder n-Decyl steht.

6. Organosilan-modifizierte Polysiloxane gemäß einem oder mehreren der Ansprüche 1 bis 5, wobei R⁷ für einen Rest -(CH₂)₃-O-(CO-(CH₂)ₙ-O)ₘ-Z, -(CH₂)₂-O-(CH₂)₄-O-(CO-(CH₂)ₙ-O)ₘ-Z oder -(CH₂)ᵣ-CO-OR¹⁴ steht, wobei n = 4 oder 5, m = 1 bis 20, Z = H, -CO-CH₃ oder CH₃, r = 3 bis 20, und R¹⁴ für einen geradkettigen oder verzweigten Alkylrest mit 1 bis 18 Kohlenstoffatomen steht.

7. Organosilan-modifizierte Polysiloxane gemäß Anspruch 6, wobei R⁷ durch Addition einer Verbindung eines Lactons mit einem ethylenisch ungesättigten Alkohol einführbar Ist.

8. Organosilan-modifizierte Polysiloxanes gemäß einem oder mehreren der Ansprüche 1 bis 7, wobei R⁸ durch Addition eines Silans, welches mindestens eine hydrolysierbare SI-gebundene Gruppe R¹² trägt und weiches eine Gruppe mit endständiger olefinischer Bindung aufweist, einführbar ist.

9. Organosilan-modifizierte Polysiloxane gemäß Anspruch 8, wobei die Gruppe mit endständiger olefinischer Bindung eine Allyl- oder Vinyl-Gruppe Ist.

10. Organosilan-modifizierte Polysiloxane gemäß einem oder mehreren der Ansprüche 8 oder 9, wobei R¹² gewählt Ist aus der Gruppe Halogen, Halogenalkyl mit 1 bis 3 Kohlenstoffatomen. OR¹³ und O-CO-R¹³, wobei R¹³ für Phenyl, Methyl, Ethyl, n-Propyl, iso-Propyl, n-Butyl, Iso-Butyl oder tert-Butyl steht, und R¹³ gegebenenfalls Ether- und/oder Thioethergruppen enthält.

11. Organosilan-modifizierte Polysiloxane gemäß Anspruch 10, wobei Halogen für Chlor, Brom oder lod steht.

12. Organosilan-modifizierte Polysiloxane gemäß einem oder mehreren der Ansprüche 8 bis 11, deren hydrolysierbare Gruppe durch Hydrolyse ganz oder teilweise umgesetzt ist.

13. Verfahren zur Herstellung der Organosilan-modifizierten Polysiloxane der Ansprüche 1 bis 12, **dadurch gekennzeichnet dass** die Reste R⁶, R⁷ und R⁸ in ein SiH-haltiges Polysiloxan, welches vorzugsweise bereits die Reste R¹, R², R³, R⁴, R⁵, R⁹ und/oder R¹⁰ trägt, mittels einer Hydrosilylierung eingeführt werden.

14. Verfahren gemäß Anspruch 13, wobei die Einführung der Reste R⁶, R⁷ und R⁸ in einem Schritt erfolgt.

15. Verfahren gemäß Anspruch 13, wobei zunächst nur ein Teil der SiH-Gruppen des SIH-haltigen Polysiloxans zu den Resten R⁶, R⁷ und/oder R⁸ umgesetzt werden und In einem weiteren Schritt die Umsetzung der verbleibenden SIH-Gruppen zu Resten R⁶ erfolgt.

16. Verfahren gemäß einem oder mehreren der Ansprüche 13 bis 15, wobei die zur Einführung des Rest R⁶ eingesetzten Verbindungen, sofern diese im Überschuss eingesetzt werden, durch Destillation entfernt werden.

17. Verfahren gemäß einem oder mehreren der Ansprüche 13 bis 16, wobei die Hydrosilylierung bei einer Temperatur zwischen Raumtemperatur und 200 °C In Gegenwart eines Katalysators erfolgt.

18. Verwendung der Organosilan-modifizierten Polysiloxane der Ansprüche 1 bis 12 oder erhalten nach einem Verfahren gemäß Ansprüchen 13 bis 17 zur Oberflächenmodifizierung.

19. Verwendung gemäß Anspruch 18, wobei die Oberflächenmodifizierung mlgratlonsstabll Ist.

20. Verwendung gemäß einem der Ansprüche 18 oder 19, wobei die Oberflächenmodifizierung die Beschichtung der Oberflächen mit anorganischen oder organischen Pigmenten und/oder Füllstoffen umfasst.

21. Verwendung gemäß einem der Ansprüche 18 oder 19, wobei die Oberflächenmodifizierung die Beschichtung von makroskopisch planaren Oberflächen, Insbesondere Im Fassaden- und Bautenschutz, umfasst.

22. Pigmente, Füllstoffe oder makroskopisch planare Oberflächen, beschichtet mit Organosilan-modifizierten Polysiloxanen der Ansprüche 1 bis 12 oder erhalten nach einem Verfahren gemäß Ansprüchen 13 bis 17,

23. Organosilan-modifizierten Polysiloxane gemäß Anspruch 1, wobei z = 1 bis 50 beträgt.

## Claims

1. Organosilane-modified polysiloxanes of the following formula: 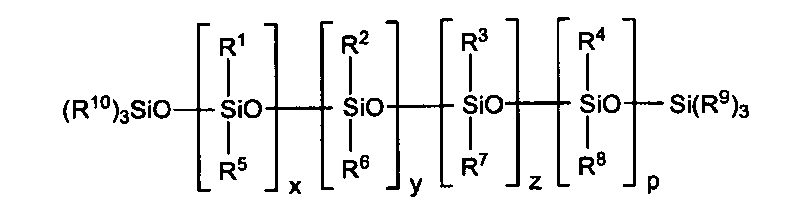 wherein
x = 0 to 200, y = 5 to 100, z = up to 50 and p = 1 to 25;
R¹, R², R³, R⁴ and R⁵ independently of one another represent saturated or unsaturated, straight-chain or branched alkyl groups having 1 to 4 carbon atoms and/or aryl groups having 6 to 9 carbon atoms;
R⁶ represents a straight-chain or branched alkyl group having 6 to 22 carbon atoms; R⁷ is present and represents a group -(CH₂)ₛ-M-Z,
wherein s represents 2 to 20,
M represents an aliphatic group
containing at least one -O-CO- or -CO-O- group and optionally ether groups, and
Z represents hydrogen, -CO-CH₃ or a straight-chain or branched alkyl group having 1 to 4 carbon atoms;
R⁸ represents a group -(CH₂)ₙ-Si(R¹¹)ᵥ(R¹²)₃₋ᵥ
where v represents 0, 1 or 2,
n represents 2 to 16,
R¹¹ represents a straight-chain or branched alkyl group having 1 to 4 carbon atoms, and
R¹² represents a group selected from the group OR¹³, O-CO-R¹³ or halogen,
wherein R¹³ represents an aromatic group or a straight-chain, branched or cyclic alkyl group having 1 to 6 carbon atoms and optionally containing ether and/or thioether groups; and
R⁹ and R¹⁰ independently of one another have the meaning of R¹, R², R³, R⁴, R⁵, R⁶, R⁷ or R⁸.

2. Organosilane-modified polysiloxanes according to claim 1, wherein x = 0 to 100 and/or y = 5 to 50 and/or z = up to 25 and/or p = 2 to 4 and/or the sum of x, y, z and p is 20 to 60.

3. Organosilane-modified polysiloxanes according to claim 1 or 2, wherein R¹, R², R³, R⁴, R⁹ and R¹⁰ independently of one another represent straight-chain alkyl groups having 1 to 4 carbon atoms.

4. Organosilane-modified polysiloxanes according to claim 3, wherein R¹, R², R³, R⁴, R⁹ and R¹⁰ represent methyl or ethyl.

5. Organosilane-modified polysiloxanes according to one or more of claims 1 to 4, wherein R⁶ represents n-hexyl, n-octyl or n-decyl.

6. Organosilane-modified polysiloxanes according to one or more of claims 1 to 5, wherein R⁷ represents a group -(CH₂)₃-O-(CO-(CH₂)ₙ-O)ₘ-Z, -(CH₂)₂-O-(CH₂)4-O-(CO-(CH₂)ₙ-O)ₘ-Z or -(CH₂)ᵣ-CO-OR¹⁴, wherein n = 4 or 5, m = 1 to 20, Z = H, -CO-CH₃ or CH₃, r = 3 to 20, and R¹⁴ represents a straight-chain or branched alkyl group having 1 to 18 carbon atoms.

7. Organosilane-modified polysiloxanes according to claim 6, wherein R⁷ can be introduced by addition of a compound of a lactone with an ethylenically unsaturated alcohol.

8. Organosilane-modified polysiloxanes according to one or more of claims 1 to 7, wherein R⁸ can be introduced by addition of a silane which carries at least one hydrolyzable Si-bonded group R¹² and which has a group with a terminal olefinic bond.

9. Organosilane-modified polysiloxanes according to claim 8, wherein the group with a terminal olefinic bond is an allyl or vinyl group.

10. Organosilane-modified polysiloxanes according to one or more of claims 8 or 9, wherein R¹² is selected from the group of halogen, haloalkyl having 1 to 3 carbon atoms, OR¹³ and O-CO-R¹³, wherein R¹³ is phenyl, methyl, ethyl, n-propyl, isopropyl, n-butyl, isobutyl or tert-butyl and R¹³ optionally contains ether and/or thioether groups.

11. Organosilane-modified polysiloxanes according to claim 10, wherein halogen represents chlorine, bromine or iodine.

12. Organosilane-modified polysiloxanes according to one or more of claims 8 to 11, whose hydrolyzable group has been wholly or partly reacted by hydrolysis.

13. Process for preparing organosilane-modified polysiloxanes of claims 1 to 12, **characterized in that** the groups R⁶, R⁷ and R⁸ are introduced by hydrosilylation into an SiH-containing polysiloxane, which preferably already carries the groups R¹, R², R³, R⁴, R⁵, R⁹ and/or R¹⁰.

14. Process according to claim 13, wherein the introduction of the groups R⁶, R⁷ and R⁸ is effected in one step.

15. Process according to claim 13, wherein at first only some of the SiH groups of the SiH-containing polysiloxane are reacted to form the groups R⁶, R⁷ and/or R⁸, and the reaction of the remaining SiH groups to form groups R⁶ is carried out in a further step.

16. Process according to one or more of claims 13 to 15, wherein the compounds used to introduce the group R⁶, if they are used in excess, are removed by distillation.

17. Process according to one or more of claims 13 to 16, wherein the hydrosilylation is effected at a temperature between room temperature and 200 °C in the presence of a catalyst.

18. Use of the organosilane-modified polysiloxanes of claims 1 to 12 or obtained by a process according to claims 13 to 17 for surface modification.

19. Use according to claim 18, wherein the surface modification is migration-stable.

20. Use according to one of claims 18 or 19, wherein the surface modification comprises the coating of the surfaces with inorganic or organic pigments and/or fillers.

21. Use according to one of claims 18 or 19, wherein the surface modification comprises the coating of macroscopically planar surfaces, particularly in the preservation of facades or structures.

22. Pigments, fillers or macroscopically planar surfaces, coated with organosilane-modified polysiloxanes of claims 1 to 12 or obtained by a process according to claims 13 to 17.

23. Organosilane-modified polysiloxanes according to claim 1, wherein z = 1 to 50.

## Revendications

1. Polysiloxanes modifiés par organosilane de formule suivante : 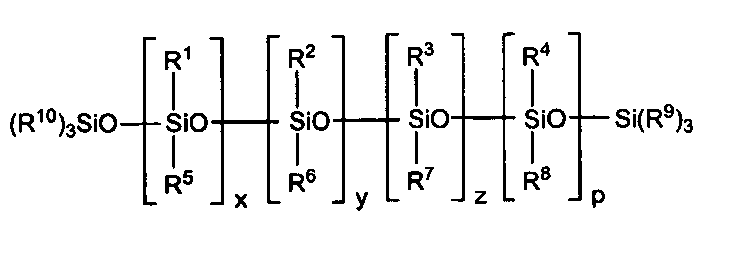 où
x = 0 à 200, y = 5 à 100, z = jusqu'à 50 et p= 1 à 25 ;
R¹, R², R³, R⁴ et R⁵ représentent, indépendamment les uns des autres, des groupes fonctionnels alkyle saturés ou insaturés, à chaîne droite ou ramifiés, ayant 1 à 4 atomes de carbone et/ou des groupes fonctionnels aryle ayant 6 à 9 atomes de carbone ;
R⁶ représente un groupe fonctionnel alkyle à chaîne droite ou ramifié ayant 6 à 22 atomes de carbone ;
R⁷ représente un groupe fonctionnel -(CH₂)ₛ-M-Z,
où s représente 2 à 20,
M représente un groupement aliphatique,
qui contient au moins un groupement -O-CO- ou -CO-O- et, le cas échéant, des groupements éther, et
Z représente de l'hydrogène, -CO-CH₃ ou un groupe fonctionnel alkyle à chaîne droite ou ramifié ayant 1 à 4 atomes de carbone ;
R⁸ représente un groupe fonctionnel -(CH₂)ₙ-Si(R¹¹)ᵥ(R¹²)₃₋ᵥ,
où v représente 0, 1 ou 2,
n représente 2 à 16,
R¹¹ représente un groupe fonctionnel alkyle à chaîne droite ou ramifié ayant 1 à 4 atomes de carbone, et
R¹² représente un groupe fonctionnel sélectionné dans le groupe OR¹³, O-CO-R¹³ ou halogène,
dans lequel R¹³ représente un groupe fonctionnel aromatique ou un groupe fonctionnel alkyle à chaîne droite, ramifié ou cyclique ayant 1 à 6 atomes de carbone qui contient, le cas échéant, des groupements éther et/ou thioéther ; et
R⁹ et R¹⁰ signifient, indépendamment l'un de l'autre, R¹, R², R³, R⁴, R⁵, R⁶, R⁷ ou R⁸.

2. Polysiloxanes modifiés par organosilane selon la revendication 1, dans lesquels x = 0 à 100 et/ou y = 5 à 50 et/ou z = jusqu'à 25 et/ou p = 2 à 4 et/ou la somme de x, y, z et p est de 20 à 60.

3. Polysiloxanes modifiés par organosilane selon l'une des revendications 1 ou 2, dans lesquels R¹, R², R³. R⁴, R⁹ et R¹⁰ représentent, indépendamment les uns des autres, des groupes fonctionnels alkyle à chaîne droite ayant 1 à 4 atomes de carbone.

4. Polysiloxanes modifiés par organosilane selon la revendication 3, dans lesquels R¹, R², R³, R⁴, R⁹ et R¹⁰ représentent du méthyle ou de l'éthyle.

5. Polysiloxanes modifiés par organosilane selon une ou plusieurs des revendications 1 à 4, dans lesquels R⁶ représente n-hexyle, n-octyle ou n-décyle.

6. Polysiloxanes modifiés par organosilane selon une ou plusieurs des revendications 1 à 5, dans lesquels R⁷ représente un groupe fonctionnel -(CH₂)₃-O-(CO-(CH₂)ₙ-O)ₘ-Z, -(CH₂)₂-O-(CH₂)₄-O-(CO-(CH₂)ₙ-O)ₘ-Z ou -(CH₂)ᵣ-CO-OR¹⁴, où n = 4 ou 5, m = 1 à 20, Z = H, -CO-CH₃ ou CH₃, r = 3 à 20, et R¹⁴ représente un groupe fonctionnel alkyle à chaîne droite ou ramifié ayant 1 à 18 atomes de carbone.

7. Polysiloxanes modifiés par organosilane selon la revendication 6, dans lesquels R⁷ peut être introduit par addition d'un composé d'une lactone avec un alcool éthyléniquement insaturé.

8. Polysiloxanes modifiés par organosilane selon une ou plusieurs des revendications 1 à 7, dans lesquels R⁸ peut être introduit par addition d'un silane qui porte au moins un groupement Si-lié hydrolysable R¹² et qui présente un groupement à liaison oléfinique terminale.

9. Polysiloxanes modifiés par organosilane selon la revendication 8, dans lesquels le groupement à liaison oléfinique terminale est un groupement allyle ou vinyle.

10. Polysiloxanes modifiés par organosilane selon une ou plusieurs des revendications 8 ou 9, dans lesquels R¹² est sélectionné dans le groupe halogène, halogénoalkyle ayant 1 à 3 atomes de carbone, OR¹³ et O-CO-R¹³, où R¹³ représente phényle, méthyle, éthyle, n-propyle, iso-propyle, n-butyle, iso-butyle ou tert-butyle, et R¹³ contient le cas échéant des groupements éther et/ou thioéther.

11. Polysiloxanes modifiés par organosilane selon la revendication 10, dans lesquels l'halogène représente du chlore, du brome ou de l'iode.

12. Polysiloxanes modifiés par organosilane selon une ou plusieurs des revendications 8 à 11, dont le groupement hydrolysable est totalement ou partiellement hydrolysé.

13. Procédé de fabrication des polysiloxanes modifiés par organosilane des revendications 1 à 12, **caractérisé en ce que** les groupes fonctionnels R⁶, R⁷ et R⁸ sont introduits par hydrosilylation dans un polysiloxane contenant du SiH, lequel polysiloxane porte de préférence déjà les groupes fonctionnels R¹, R², R³, R⁴, R⁵, R⁹ et/ou R¹⁰.

14. Procédé selon la revendication 13, dans lequel l'introduction des groupes fonctionnels R⁶, R⁷ et R⁸ s'effectue en une étape.

15. Procédé selon la revendication 13, dans lequel seule une partie des groupements SiH du polysiloxane contenant du SiH sont ensuite transformés en groupes fonctionnels R⁶, R⁷ et/ou R⁸ et la transformation des groupements SiH restants en groupes fonctionnels R⁶ s'effectue en une étape supplémentaire.

16. Procédé selon une ou plusieurs des revendications 13 à 15, dans lequel les composés utilisés pour l'introduction du groupe fonctionnel R⁶ sont éliminés par distillation si ceux-ci sont employés en excès.

17. Procédé selon une ou plusieurs des revendications 13 à 16, dans lequel l'hydrosilylation s'effectue à une température comprise entre la température ambiante et 200 °C en présence d'un catalyseur.

18. Utilisation des polysiloxanes modifiés par organosilane des revendications 1 à 12 ou obtenus à partir d'un procédé selon les revendications 13 à 17 pour la modification de surfaces.

19. Utilisation selon la revendication 18, dans laquelle la modification de surfaces est résistant à la migration.

20. Utilisation selon l'une des revendications 18 ou 19, dans laquelle la modification de surfaces comprend le revêtement des surfaces avec des pigments et/ou matériaux de remplissage anorganiques ou organiques.

21. Utilisation selon l'une des revendications 18 ou 19, dans laquelle la modification de surfaces comprend le revêtement de surfaces macroscopiquement planaires, notamment dans la protection des façades et édifices.

22. Pigments, matériaux de remplissage ou surfaces macroscopiquement planaires, revêtus de polysiloxanes modifiés par organosilane des revendications 1 à 12 ou obtenus à partir d'un procédé selon les revendications 13 à 17.

23. Polysiloxanes modifiés par organosilane selon la revendication 1, dans lesquels z = 1 à 50.
